# EUROPÄISCHE PATENTSCHRIFT

(11) **EP 2 422 397 B1**
(45) Veröffentlichungstag und Bekanntmachung des Hinweises auf die Patenterteilung: **12.06.2013**
(21) Anmeldenummer: 10715786.9
(22) Anmeldetag: 16.04.2010
(51) Int. Cl.: H01M 8/24, H01M 8/04, H01M 8/00, C01B 3/00, C25B 1/00, C01B 3/02, C25B 15/08, C25B 9/04, H01M 8/02

(54) **BRENNSTOFFZELLENSYSTEM**
FUEL CELL SYSTEM
SYSTÈME DE PILES À COMBUSTIBLE

(30) Priorität: 20.04.2009 DE 102009017779
(43) Veröffentlichungstag der Anmeldung: 29.02.2012
(73) Patentinhaber: Ritter Elektronik GmbH, 42897 Remscheid (DE); Propuls GmbH, 46240 Bottrop (DE); Gräbener Maschinentechnik GmbH & Co. KG, 57250 Netphen - Werthenbach (DE); Fachhochschule Gelsenkirchen - Energieinstitut, 45877 Gelsenkirchen (DE)
(72) Erfinder: BRODMANN, Michael, 46569 Hünxe (DE); BAADER, Uwe, 42111 Wuppertal (DE); GREDA, Martin, 45892 Gelsenkirchen (DE); MUTASCU, Christian, 45894 Gelsenkirchen (DE); ROTH, Jeffrey, 40477 Düsseldorf (DE); NEUMANN, Jörg, 46240 Bottrop (DE); GRÄBENER, Theodor R., 57234 Wilnsdorf (DE); KAPP, Dieter, 57234 Wilnsdorf (DE); FRITZ, Werner, 76297 Stutensee (DE)
(74) Vertreter: Taruttis, Tilman
(86) Internationale Anmeldenummer: PCT/EP2010/055012
(87) Internationale Veröffentlichungsnummer: WO 2010/121955

(56) Entgegenhaltungen:
- WO-A1-02/099915
- WO-A1-2006/082195
- WO-A2-02/27833
- WO-A2-2007/087240
- DE-A1- 10 012 621
- DE-A1-102004 003 670
- DE-C1- 19 517 042
- DE-C1- 19 822 697
- JP-A- 1 209 671

## Beschreibung

Die Erfindung betrifft ein Brennstoffzellensystem, insbesondere ein modulares Brennstoffzellensystem mit einer Versorgungseinheit, einer Steuer- und Regeleinheit und einer Brennstoffzelleneinheit.

Brennstoffzellen dienen zur Wandlung chemischer Reaktionsenergie in elektrische Energie. Einer Brennstoffzelle werden dazu ein Brennstoff und ein Oxidationsmittel kontinuierlich zugeführt. Bei der Reaktion der beiden wird ein Strom von Elektronen und damit elektrische Energie erzeugt. Eine konventionelle, einzelne Brennstoffzelle liefert dabei typischerweise eine geringe Spannung, typischerweise kleiner gleich 1,2 Volt, und eine vergleichsweise hohen Strom bis zu etwa 3A/cm², wobei sich die Flächenangabe auf die Größe der aktiven Flächen in einer Brennstoffzelle beziehen. Da bei modernen Membranbrennstoffzellen die Größe der aktiven Flächen der Membran-Elektrodeneinheit leicht mehr als 100cm² betragen, kann eine einzelne solche Zelle einen Strom von bis 300A bei einer Gleichspannung von maximal 1,2V liefern. Derartig hohe Ströme bei gleichzeitig geringer Spannung sind technisch nur schwer nutzbar.

Die von einer einzelnen Zelle erzeugte Spannung ist damit für viele heute übliche Anwendungen zu gering. Um höhere Spannungen zu erzeugen werden in konventionellen Brennstoffzellsystem häufig mehrere Zellen in Reihe geschaltet, so dass sich die jeweiligen Spannungen der Zellen addieren. Dabei sind die elektrisch miteinander verbundenen Brennstoffzellen häufig auch hinsichtlich der Versorgung mit dem Brennstoff und dem Oxidationsmittel in Reihe geschaltet, so dass die Brennstoffableitung einer Zelle die Brennstoffzuleitung der in Reihe geschalteten nächsten Brennstoffzelle ist. Analog können die Brennstoffzellen hinsichtlich der Versorgung mit Oxidationsmittel in Reihe verbunden sein.

Konventionelle Brennstoffzellen weisen üblicherweise eine flache, planare Form mit einer viereckigen Grundfläche auf. Eine Reihenschaltung mit einer Mehrzahl von Brennstoffzellen ist dabei häufig als sogenannter "Stack", also als Stapel, ausgeführt. Die flachen Brennstoffzellen sind dabei übereinander gestapelt, sodass sich ein Quader mit der Grundfläche einer Brennstoffzelle und der Höhe entsprechend der Anzahl der gestapelten Zellen und damit eine handhabbare geometrische Form ergibt. Die in einem solchen Stack verbundenen Brennstoffzellen sind dabei fest miteinander verbunden. Um eine einzelne Zelle aus einem solchen festen Verbund beispielsweise im Falle eines Defekts herauszunehmen, müssen die elektrischen Verbindungen sowie die Zu- und Ableitungen des Brennstoffs, des Oxidationsmittels sowie die Ableitung des Reaktionsprodukts gelöst werden. Dementsprechend ist das Herausnehmen einer einzelnen Brennstoffzelle aus einem solchen Stack nur mit erheblichem Aufwand möglich. Ein solcher Stack kann nur mit erheblichem Aufwand an eine gewünschte Anzahl von Brennstoffzellen angepasst werden. Letztlich führt dies dazu, dass derartige Stacks von Brennstoffzellen im Handel mit einer festgelegten und nahezu unveränderbaren Anzahl von Zellen angeboten werden.

Ein modulares Brennstoffzellensystem ist in der DE 10 2006 048 860 A1 offenbart. Das beschriebene System weist eine Modulbasiseinheit auf mit mindestens zwei flächig angeordneten Ausnehmungen zur formschlüssigen Aufnahme von Brennstoffzellen, so dass die Brennstoffzellen in der Modulbasiseinheit flach nebeneinander angeordnet sind. Damit ergibt sich eine flächige, planare Bauform des Brennstoffzellensystems. Die flache Bauform des beschriebenen Systems bedingt jedoch einen erheblichen Platzbedarf.

Die DE 195 17052 C1 offenbart ein Brennstoffzellensystem umfassend einen Brennstoffzellenstapel, welcher eine Vielzhl von aufeinander gestapelten Brennstoffzellen umfasst. Über ein Druckgas kann ein Anpressendruck auf die oberste Brennstoffzelle des Brennstoffzellenstapels ausgeübt werden. Dies führt insbesondere für die sich in der Stapelmitte befindlichen Brennstoffzellen zu einer ungleichmäßigen Verteilung des Anpressdrucks. Damit besteht die Aufgabe ein Brennstoffzellensystem vorzuschlagen, beidem der Anpressdruck an allen Stellen gleichrist.

Diese Aufgabe wird mit einem Brennstoffzellensystem nach Anspruch 1 gelöst.

Im Folgenden wird das erfindungsgemäße System anhand von Figuren beschrieben.

Es zeigen
- Fig. 1: ein Blockschaltbild des modularen Brennstoffzellensystems,
- Fig. 2: eine schematische Darstellung eines Schnittes durch eine Brennstoffzelle,
- Fig. 3: eine schematische Darstellung eines Ausschnitts einer Brennstoffzelle,
- Fig. 4: eine schematische Darstellung einer Bodenplatte mit aufgesteckten Brennstoffzellen,
- Fig. 5: eine schematische Darstellung eines Gehäuses einer Brennstoffzelleneinheit.

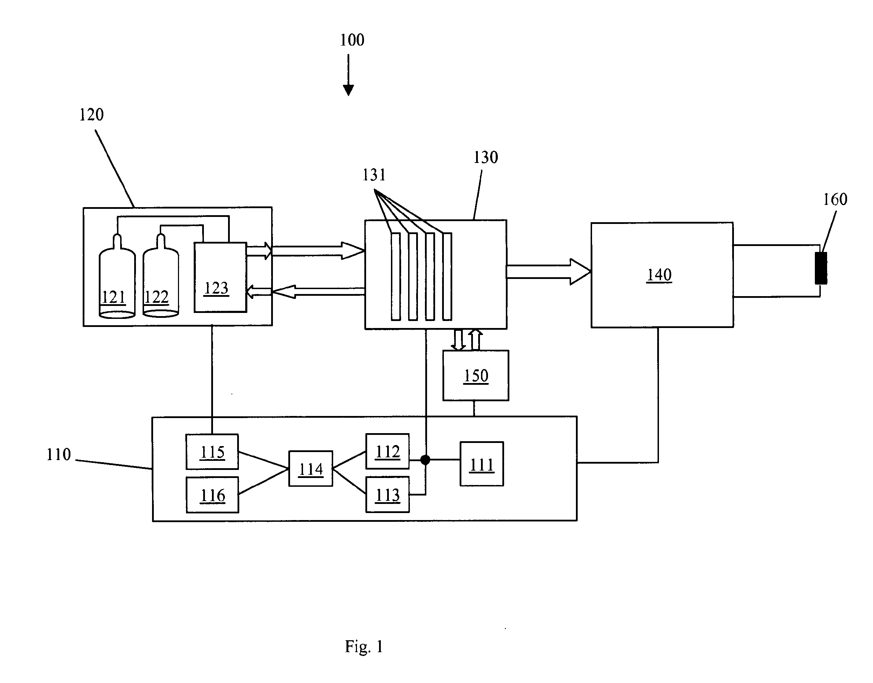

Das in Figur 1 gezeigte Blockschaltbild eines Brennstoffzellensystems 100 umfasst eine zentrale Steuer- und Regelungseinheit 110, eine Versorgungseinheit 120, eine Brennstoffzelleneinheit 130, optional einen Spannungswandler 140 sowie optional eine Druckhaltevorrichtung 150.

Die Versorgungseinheit 120 weist alle Einrichtungen auf, um einerseits den Brennstoff sowie das Oxidationsmittel, also die zum Betrieb des Systems notwendigen Betriebsstoffe, zu bevorraten und diese der Brennstoffzelleneinheit 130 zuzuleiten. Diese Einrichtungen umfassen Vorratsbehälter 121, 122 für Brennstoff bzw. das Oxidationsmittel und Steuerungseinrichtungen 123 zur kontrollierten Zufuhr des Brennstoffs bzw. des Oxidationsmittels zu der Brennstoffzelleneinheit, wobei die Vorratsbehälter 121, 122 mit den Steuerungseinrichtungen 123 in einem gemeinsamen Gehäuse oder außerhalb eines solchen Gehäuses angeordnet sein können. Die Steuerungseinrichtungen 123 sind dabei einerseits mit den Vorratsbehältern, andererseits mit der Brennstoffzelleneinheit und mit der zentralen Steuer- und Regelungseinheit 110 verbunden. In einer Ausführungsform können die Steuerungseinrichtungen Pumpen, beispielsweise eine Wasserstoff- und/oder eine Luftpumpe, sowie steuerbare Ventile und Druckregler zur Steuerung des Brennstoffflusses oder Oxidationsmittelflusses sein, so dass der Brennstoff und das Oxidationsmittel mit einem Überdruck gegenüber der umgebenden Atmosphäre von 0,5 Bar bis 1,5 Bar der Brennstoffzelleneinheit zugeleitet werden. Weiterhin weist die Versorgungseinheit 120 Einrichtungen zur Entgegennahme unverbrauchten Brennstoffes oder unverbrauchten Oxidationsmittels auf. Diese entgegengenommenen, unverbrauchten Betriebsstoffe können dann den entsprechenden Vorratsbehältern 121, 122 oder der Brennstoffzelleneinheit 130 wieder zugeführt werden.

Erfindungsgemäß weist das Brennstoffzellensystem 100 eine Druckhaltevorrichtung 150 zur gesteuerten Erzeugung und Aufrechterhaltung eines Überdruckes in einem Gehäuse der Brennstoffzelleneinheit 130 aufweisen. Zur Steuerung und Regelung des Druckes kann die Druckhaltevorrichtung mit der Steuer- und Regelungseinheit 110 verbunden sein. Weiterhin kann die Druckhaltevorrichtung einen Vorratsbehälter zur Speicherung des Druck erzeugenden Mediums sowie eine Heiz- oder Kühlvorrichtung zur Erwärmung oder Kühlung des Mediums aufweisen.

Die optionale Druckhaltevorrichtung 150 erzeugt mittels des Mediums in dem Gehäuse der Brennstoffzelleneinheit einen Überdruck gegenüber dem umgebenden atmosphärischen Druck, wobei der Überdruck zwischen 5 bar und 20 Bar, vorzugsweise zwischen 10 Bar und 15 Bar betragen kann, so dass der Druck jedenfalls höher als der Innendruck einer in dem Gehäuse der Brennstoffzelleneinheit angeordneten Brennstoffzelle ist, der durch den Brennstoff- bzw. den Oxidationsmitteldruck bestimmt ist.

Das zur Erzeugung und Erhaltung des Drucks eingesetzte Medium kann ein geeignetes gasförmiges oder flüssiges Heiz- oder Kühlmedium sein. Das Medium kann dabei mittels der Heiz- oder Kühlvorrichtung erwärmt oder gekühlt werden, sodass das Medium neben der Druckerzeugung gleichzeitig zur Regelung der Temperatur in dem Gehäuse der Brennstoffzelleneinheit eingesetzt werden kann.

Die Verbindungen der Druckhaltevorrichtung 150 zu der Brennstoffzelleneinheit 130 sowie zu der Steuer- und Regelungseinheit sind dabei bevorzugt als jeweils Schnellwechselanschluss ausgestaltet.

Die Steuer- und Regelungseinheit 110 ist mit der Versorgungseinheit 120, mit der Brennstoffzelleneinheit 130 sowie mit dem optionalen Spannungswandler 140 und der optionalen Druckhaltevorrichtung 150 verbunden.

Die Steuer- und Regelungseinheit weist Steuer- und Regelungseinrichtungen zur Steuerung des Brennstoffzellensystems 100 auf. Dies umfasst Steuer- und Regelungseinrichtungen zur Steuerung des Zuflusses von Brennstoff und des Zuflusses von Oxidationsmittel zu der Brennstoffzelleneinheit 130 auf. Die Steuer - und Regelungseinrichtungen der Einheit 110 steuern dementsprechend die in der Versorgungseinheit 120 enthaltenen Pumpen, Ventile und Druckregler an, sodass der Brennstoff bzw. das Oxidationsmittel den Brennstoffzellen während des Betriebs der Brennstoffzelleneinheit 130 in ausreichender Menge und mit geeignetem Druck zugeführt werden.

Die Versorgung der Steuer- und Regelungseinheit 110 mit Spannung bzw. Strom findet während des Betriebs des Brennstoffzellensystems 100 über die Brennstoffzellen statt, also mit der von dem System selbst erzeugten elektrischen Energie. Diese kann der Steuer- und Regelungseinheit über die Verbindung zur Brennstoffzelleneinheit oder alternativ über die Verbindung zum Spannungswandler 140 zugeführt werden. Für die initiale Versorgung weist die Steuer- und Regelungseinheit einen Energiespeicher 111 auf, über den die Einheit zu Beginn des Betriebs, also beispielsweise beim Einschalten des Brennstoffzellensystems, mit elektr. Energie versorgt wird. Der Energiespeicher 111 liefert dabei ausreichend Energie zur Versorgung der Einrichtungen innerhalb der Steuer- und Regelungseinheit 110 und zur Versorgung der Versorgungseinheit, soweit für dies für die Inbetriebnahme des Systems 100 notwendig ist. Der Energiespeicher 111 kann dabei vorzugsweise wiederaufladbar sein, so dass der Energiespeicher während des Betriebs des Systems für eine nachfolgende Inbetriebnahme wieder aufgeladen werden kann. In einer Ausführungsform kann der Energiespeicher eine wiederaufladbare Batterie, also ein Akkumulator, oder ein Kondensator geringer Eigenentladung sein, beispielsweise sogenannte Goldcaps.

Weiterhin kann die Steuer- und Regelungseinheit 110 einen oder mehrere Spannungswandler 112, 113 zum Abwärtswandeln oder Hochsetzen der Spannung aus dem Energiespeicher 111 oder der von der Brennstoffzelleneinheit 130 oder dem Spannungswandler 140 gelieferten Spannung sein. Die Spannungswandler 112, 113 wandeln die ihnen jeweils zugeführte Spannung in eine Spannung zur Versorgung der elektronischen Elemente in der Steuer- und Regelungseinheit sowie zur Versorgung beispielsweise der Ventile, Pumpen oder Druckregler in der Versorgungseinheit 120 um.

Zur Regelung und Steuerung der Versorgungseinheit 120, der Brennstoffzelleneinheit und des Spannungswandlers 140 weist die Steuer- und Regelungseinheit weiterhin elektronische Baugruppen auf, die zum einen Regelparameter, beispielsweise von der Brennstoffzelleneinheit 130, dem Spannungswandler 140 oder der optionalen Druckhaltevorrichtung 150 sowie der Versorgungseinheit 120 erhalten, und die entsprechend einer vorgegebenen Betriebsweise zur Steuerung und Regelung der Versorgungseinheit, der Brennstoffzelleneinheit 130, des Spannungswandlers 140 und der Druckhaltevorrichtung 150 notwendigen Parameter ermittelt und die verbundenen Einheiten entsprechend ansteuern. Dabei kann die Steuer- und Regeleinheit so ausgebildet sein, dass jede der Brennstoffzellen in der Brennstoffzelleneinheit hinsichtlich der Betriebsparameter separat überwacht und hinsichtlich der Versorgung mit Betriebsstoffen separat angesteuert werden kann. In einer bevorzugten Ausführungsform weist die Steuer- und Regelungseinheit dazu einen Mikrocontroller 114 und damit verbundene digitale oder analoge Ein- und Ausgangsstufen 115, 116 auf, welche die von verbundenen Einheiten an die Steuer - und Regelungseinheit 110 gelieferten Signale auf Pegel anpassen, so der Mikrocontroller 114 diese verarbeiten kann, oder die von dem Mikrocontroller gelieferten Pegel auf diejenigen für die Ansteuerung verbundener Einheiten anpasst.

Hinsichtlich der in der Figur dargestellten Verbindungen zwischen den Funktionsblöcken in der Steuer- und Regelungseinheit ist darauf hinzuweisen, dass aus Gründen der Übersichtlichkeit nur einige der tatsächlichen elektrischen Verbindungen dargestellt sind.

Die Brennstoffzelleneinheit 130 ist zur Zu- und Ableitung von Brennstoff bzw. Oxidationsmittel mit der Versorgungseinheit 120 verbunden. Diese Verbindungen sind dabei so ausgebildet, dass diese sich schnell und einfach verbinden und lösen lassen, so dass die Brennstoffzelleneinheit 130 mit möglichst wenigen Handgriffen von der Versorgungseinheit getrennt und mit dieser verbunden werden kann. Die Leitungsverbindungen sind vorzugsweise dabei als Schnellwechsel-Automatikanschluss ausgebildet, so dass bei einer Auftrennung eines Anschlusses der Durchfluss automatisch gestoppt wird, die Leitung also verschlossen ist. Im umgekehrten Falle soll ein solcher Automatikanschluss den Durchfluss automatisch freigeben, sobald ein Anschluss an das zugehörige Gegenstück angeschlossen wird. Die Zu- und Abführung der Betriebsstoffe zu bzw. von einer Brennstoffzelleneinheit kann in einer einzigen Verbindungseinheit, vorzugsweise einer Schnellwechsel-Steckverbindungseinheit mit einem Verriegelungsmechanismus, zusammengefasst sein, so dass das Anschließen bzw. Abtrennen einer Brennstoffzelleneinheit 130 von einer Versorgungseinheit 120 durch Verbinden bzw. Auftrennen dieser zentralen Verbindung erfolgen kann. Derartige Schnellwechselanschlüsse, die typischerweise eine Schnellwechselkupplung und einen entsprechenden Schnellwechselstecker umfassen, seien dabei solche, die ohne oder mit minimalem Einsatz von Werkzeug trennbar und verbindbar sind.

Die elektrischen Anschlüsse einer Brennstoffzelleneinheit 130 können in einer Ausführungsform ebenfalls als Schnellwechselanschlüsse ausgebildet sein, dass diese sich schnell und einfach trennen und verbinden lassen. Beispielsweise können die elektrischen Anschlüsse als Steckverbindung ausgebildet sein, sodass zum elektrischen Trennen bzw. Verbinden einer Brennstoffzelleneinheit mit der Steuer - und Regelungseinheit 110 die Stecker von Hand zu trennen bzw. miteinander zu verbinden sind. In einer Ausführungsform sind sämtliche elektrischen Verbindungen in einem einzigen Steckverbinder zusammengeführt, so dass eine Brennstoffzelleneinheit mittels dieser einen Steckverbindung elektrisch angeschlossen und getrennt werden kann.

Ebenso können alle Anschlüsse von und zu der Druckhaltevorrichtung 150 als Schnellwechselanschlüsse ausgeführt sein.

Zur Erzeugung elektrischer Energie aus dem zugeführten Brennstoff und Oxidationsmittel kann die Brennstoffzelleneinheit 130 ein oder mehrere Brennstoffzellen 131 aufweisen. Die Brennstoffzellen können dabei zur Erhöhung der Ausgangsspannung der Brennstoffzelleneinheit elektrisch in Reihe, oder alternativ zur Erhöhung des Ausgangsstroms parallel geschaltet sein. In einer weiteren Ausführungsform kann die von den Brennstoffzellen erzeugte Spannung bzw. der Strom einer jeden Zelle jeweils separat aus der Brennstoffzelleneinheit herausgeführt und dann separat einer weiteren Funktionseinheit zugeleitet sein, beispielsweise zum einen der Steuer- und Regeleinheit zur separaten Überwachung einer jeden Brennstoffzelle und zum anderen dem Spannungswandler, sodass dieser die elektrische Verschaltung der Spannungen und Ströme der Brennstoffzellen steuert.

Die von der mindestens einen Brennstoffzelle 131 in der Brennstoffzelleneinheit 130 erzeugte Spannung kann optional einem Spannungswandler 140 zugeführt werden, der eine Spannungswandlung auf eine gewünschte Ausgangsspannung zum Betrieb eines beliebigen angeschlossenen Verbrauchers 160 ausführt, sodass das Brennstoffzellensystem 100 eine dem Verbraucher 160 angepasste Ausgangsspannung und/oder einen angepassten Ausgangsstrom liefert. Ohne den optionalen Spannungswandler 140 ist der Verbraucher 160 direkt an eine Brennstoffzelleneinheit angeschlossen.

Der Spannungswandler 140 ist dabei mit der Steuer- und Regelungseinheit 110 verbunden und übermittelt dieser die Werte der Eingangsspannung und des -stroms sowie der Ausgangsspannung und des -stroms, so dass die Steuer- und Regelungseinheit 110 das System 100 den Verbraucher 160 entsprechend voreingestellter, gewünschter Spannungs- und Stromparameter versorgt.

Die elektrischen Anschlüsse des Spannungswandlers 140 sowohl zur Brennstoffzelleneinheit 130 als auch zur Steuer- und Regelungseinheit 110 sind dabei vorzugsweise so ausgelegt, dass die Verbindungen schnell hergestellt und gelöst werden können. In einer Ausführungsform können dabei sämtliche Verbindungen zu einer verbundenen Einheit 130 oder 110 jeweils in einer zentralen Verbindungseinheit, beispielsweise in jeweils einem zentralen Stecker oder alternativ in einem gemeinsamen Stecker zusammengeführt sein.

In einer weiteren Ausführungsform können auch mehrere Brennstoffzelleneinheiten 130 (parallel oder seriell) mit einer oder mehreren Versorgungseinheiten 120, einer Steuer- und Regeleinheit 120, sowie einem Spannungswandler 140 und ein oder mehreren Druckhaltevorrichtungen verbunden sein, so dass sich durch Reihen - und/oder Parallelschaltung einer beliebigen Anzahl von Brennstoffzelleneinheiten eine beliebige Leistungserzeugung erreichen lässt, die mittels des Spannungswandlers 140 mit einer beliebigen Spannung und Stromstärke an einen Verbraucher abgegeben werden kann. Auf diese Weise lässt sich aus den verschiedenen Funktionseinheiten modular eine Strom-/Spannungsquelle nahezu beliebiger Leistungsstärke und mit beliebigen Ausgangsspannungen und -strömen erzeugen.

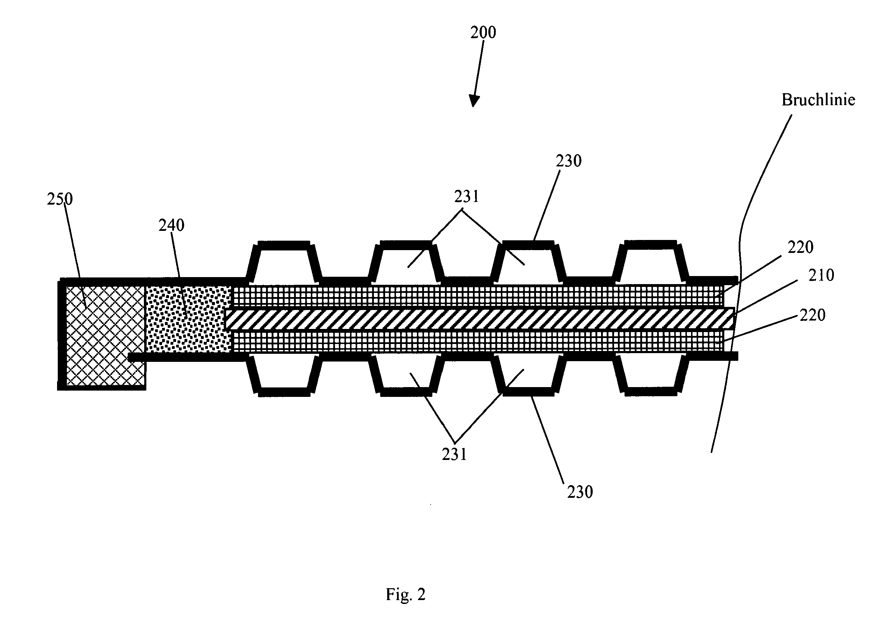

Figur 2 zeigt einen schematischen Schnitt durch eine Brennstoffzelle 200. In einer Ausführungsform können derartige Brennstoffzellen als Brennstoffzelle 131 in Brennstoffzelleneinheiten 130 eingesetzt werden.

Die Brennstoffzellen können dabei in einer Ausführungsform sogenannte Niedertemperatur oder Hochtemperatur PEM Brennstoffzellen sein, die Wasserstoff und Sauerstoff als Betriebsstoffe bei max. 80°C oder max. 180°Celsius verbrennen. Alternativ dazu kann eine sogenannte Direkt-Methanol Brennstoffzelle, eine sogenannte DMFC (direct methanol fuel cell), mit den Betriebsstoffen Methanol und Sauerstoff verwendet werden.

Die Brennstoffzelle 200 weist eine im wesentlichen planare geometrische Form auf. In einer Ausführungsform kann die Zelle 200 eine Kantenlänge von ca. 100mm x 110mm und ein Dicke einigen Millimetern, typischerweise von 3mm bis 10mm aufweisen.

Der Schnitt durch die Zelle zeigt eine Membran-Elektroden-Einheit 210, also eine sogenannte MEA (membrane electrode assembly), die an ihren beiden großen Flächen jeweils von Gasdiffusionslagen 220, sogenannten GDLs (gas diffusion layers), bedeckt ist. Die Gasdiffusionslagen 220 sind an ihren jeweiligen Außenseiten von Polplatten 230 bedeckt, die zur Abführung des erzeugten elektrischen Stromes dienen. Die Polplatten weisen dabei jeweils an ihrer an die Gasdiffusionslage angrenzenden Fläche Gasführungskanäle 231 auf, durch die der Brennstoff bzw. das Oxidationsmittel geführt werden. Die Gasführungskanäle der Polplatten bilden damit das sogenannte Flowfield, also die Flächen, über die der Brennstoff bzw. das Oxidationsmittel den Gasdiffusionslagen zugeführt wird.

Die Gasdiffusionslagen 220 sowie die Membran-Elektroden-Einheit grenzen an ihren Rändern jeweils an eine elektrisch isolierende Dichtung 240, welche den seitlichen Abfluss des Brennstoffes bzw. Oxidationsmittels aus den Gasdiffusionslagen und der MEA verhindert sowie die Polplatten elektrisch gegeneinander isoliert. Die Dichtung 240 grenzt an einen elektrischen Isolator 250, der die Polplatten 230 elektrisch gegeneinander isoliert.

Die Kanäle zur Gasführung können dabei so angeordnet sein, dass sowohl die zuleitenden Anschlüsse als auch die ableitenden Anschlüsse zu einer gemeinsamen Kante bzw. Schmalseite der Brennstoffzelle geführt sind. Die Versorgung der Brennstoffzelle mit Brennstoff und Oxidationsmittel sowie die Entsorgung der entstehenden Reaktionsprodukte findet damit an einer Kante, also einer schmalen Seite der Brennstoffzelle, statt. Die zugehörigen Anschlüsse der Brennstoffzelle können damit ebenfalls auf einer Schmalseite der Zelle 200 angeordnet sein.

In einer alternativen Ausführungsform können die Versorgungsanschlüsse der Brennstoffzelle an gegenüberliegenden Schmalseiten angeordnet sein. In einer Variante können dabei alle Zuleitungen auf einer Schmalseite und alle Ableitungen auf der gegenüberliegenden Schmalseite angeordnet sein.

In einer weiteren alternativen Ausführungsform können die Zu- und Ableitung für Brennstoff auf einer Schmalseite und die Zu- und Ableitung für Oxidationsmittel auf der gegenüberliegenden Schmalseite der Zelle angeordnet sein.

In einer Ausführungsform können die Polplatten 230 aus einem einzigen metallischen Werkstoff gebildet sein. Ein solches Metall kann ein Edelstahl, insbesondere ein korrosionsbeständiger Edelstahl sein. In einer alternativen Ausführungsform können die Polplatten 230 aus mehr als einem Metall gebildet sein, wobei die Metalle in Schichten angeordnet sind. Ein solcher Aufbau aus mehreren Schichten kann beispielsweise eine äußere Schicht aus Nickel umfassen, wobei die Nickelschicht die gasführende Oberfläche in dem Flowfield bildet. Auf dieser ersten kann eine Schicht aus Edelstahl sein, welche die notwendige mechanische Festigkeit einer Polplatte bewirkt. So kann beispielsweise die Edelstahlschicht geformt und strukturiert werden, so dass diese die gasführenden Kanäle - das Flowfield - bildet, wobei die das Flowfield bildende Seite der Polplattenschicht aus Edelstahl mit herkömmlichen Verfahren vernickelt wird. Auf die Außenseite der Polplatte kann optional eine weitere Metallschicht aufgebracht werden, welche die Leitfähigkeit der Polplatte verbessert. So kann auf die Außenseite der Polplatte, die also nicht mit einem der Betriebsstoffe in Kontakt kommt, eine Kupferschicht aufgebracht werden. Auf diese Weise können mit einem mehrschichtigen Aufbau verschiedener Metalle die gewünschten mechanischen Eigenschaften, wie beispielsweise hohe Festigkeit, und die gewünschten elektrischen Eigenschaften erreicht werden.

In einer weiteren Ausführungsform können die Polplatten aus Graphit erstellt sein oder eine Graphitschicht aufweisen.

Die Polplatten der Brennstoffzelle 200 können auf verschiedene Weisen miteinander verbunden sein, wobei die Verbindung immer elektrisch isolierend ist. In der gezeigten Ausführungsform sind die Polplatten 230 durch eine Bördelung oder Falzung mit dazwischen liegender Isolierung 250 miteinander verbunden. Die Bördelung oder Falzung kann dabei an den Stellen der schmalen Seiten unterbrochen sein, an denen Anschlüsse für die Zu- und Abführleitungen angeordnet sind. An den Ecken eine Brennstoffzelle kann dabei eine Falzung mit einem zusätzlichen Eckumschlag hergestellt sein, so dass insbesondere die Ecken zur Formstabilität der Brennstoffzelle beitragen.

In einer alternativen Ausführungsform kann die Brennstoffzelle teilweise oder vollständig von Kunststoff umgeben sein. Eine teilweise Umhüllung der Brennstoffzelle mit Kunststoff ist damit als Rahmen ausgeführt, wobei der Rahmen entlang der Ränder einer Brennstoffzelle ausgebildet ist. Die Umhüllung aus Kunststoff bewirkt damit zumindest teilweise die Formstabilität einer Brennstoffzelle. Anschlüsse der Brennstoffzelle für die Zu- und Abfuhr von Brennstoff, Oxidationsmittel oder Reaktionsprodukten können durch die Kunststoffumhüllung hindurchgeführt sein oder sind in dieser ausgebildet, sodass eine Steckverbindung ein integraler Bestandteil der zumindest teilweisen Kunststoffumhüllung ist.

Der Rahmen kann weiterhin so ausgestaltet sein, dass dieser eine Zu- und/oder Ableitung für Brennstoff oder das Oxidationsmittel oder ein Reaktionsprodukt aufweist. In einer Ausführungsform kann eine solche Zu- oder Ableitung von einer Schmalseite zu der gegenüberliegenden Schmalseite führen. Bei einer Brennstoffzelle, deren sämtliche Anschlüsse an einer Schmalseite angeordnet sind, könnte damit beispielsweise Brennstoff oder das Oxidationsmittel zu der gegenüberliegenden Schmalseite und dort in die Brennstoffzelle geleitet werden, sodass innerhalb der Brennstoffzelle die Flüsse von Brennstoff und Oxidationsmittel entgegengesetzt wären; die Brennstoffzelle damit nach dem Gegenstromprinzip betrieben wird.

Für die Funktion der Brennstoffzelle ist es notwendig, dass die Polplatten 230 einen Druck auf die Gasdiffusionslagen und die Membran-Elektroden-Einheit ausüben. Dieser Druck gewährleistet zum einen die Dichtheit zwischen benachbarten Gasführungskanälen, so dass die Gase nur wie vorgesehen in den Gaskanälen strömen, jedoch keine kürzeste Verbindung zwischen jeweiliger Zu- und Ableitung suchen können. Zum anderen bewirkt der Druck den notwendigen elektrischen Kontakt zwischen den Polplatten und den Gasdiffusionslagen, sodass die bei der Reaktion in der Brennstoffzelle entstehenden Elektronen die Kathode erreichen.

In einer nicht erfindungsgemäßen Ausführungsform kann der Druck der Polplatten auf die Gasdiffusionslagen bzw. Membran-Elektroden-Einheit durch eine Bombierung der Polplatten bewirkt werden. Dabei werden die Polplatten so hergestellt, dass diese im entspannten Zustand, beispielsweise vor dem Zusammenfügen einer Brennstoffzelle, eine konkave Wölbung aufweisen. Werden bei der Montage der Brennstoffzelle die Kanten der Polplatten miteinander verbunden, so dass die Kanten der Polplatten zusammen gezogen werden, so bewirkt die Bombierung der Polplatten den gewünschten Anpressdruck. Während der Herstellung der Polplatten kann eine solche Bombierung in konventioneller Weise durch geeignete Walzung bewirkt werden.

In einer alternativen ebenfalls nicht erfindungsgemäßen Ausführungsform kann der Anpressdruck der Polplatten auf die Gasdiffusionslagen durch Klammern, insbesondere Federstahlklammern erzeugt werden, die von außen auf eine Brennstoffzelle aufgesetzt werden.

Weiterhin weist eine Brennstoffzelle erfindungsgemäß flexible Polplatten auf, die keinen intrinsischen Druck auf die Gasdiffusionslagen ausüben, jedoch so flexibel sind, dass ein von außen auf die Polplatten ausgeübter Druck eine entsprechende Verformung bewirkt und somit den Außendruck weiterleiten. Dabei können eine oder beide Polplatten die entsprechende Flexibilität aufweisen. In diesem Falle wird der für den Betrieb der Brennstoffzelle notwendige Druck während des Betriebes der Zelle von außen auf die Polplatten ausgeübt. Dazu kann, wie nachfolgend beschrieben, die Zelle in einem Überdruckbehälter betrieben werden, wobei der Überdruck beispielsweise einer Kühlflüssigkeit oder-gases den Anpressdruck der Polplatten bewirkt.

In einer weiteren nicht erfindungsgemäßen Ausführungsform kann die Brennstoffzelle in dem gewünschten Zustand, wenn also die Polplatten den gewünschten Druck ausüben, vergossen werden. Das erstarrte Vergussmaterial bewirkt dann den gewünschten Druck von außen auf die Polplatten, sodass diese den Druck auf die Gasdiffusionslagen erzeugen.

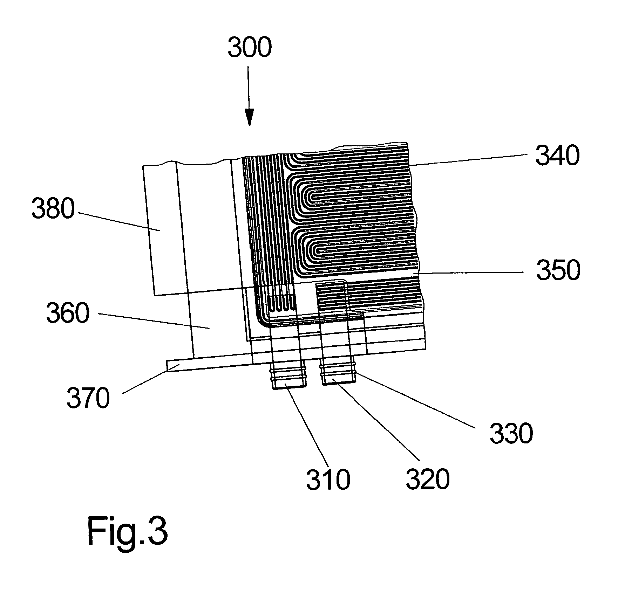

Figur 3 zeigt einen Ausschnitt einer Brennstoffzelle 300 mit einer Zuleitung 310 und einer Ableitung 320, die an einer Schmalseite der Brennstoffzelle angeordnet sind. Eine solche Brennstoffzelle kann in einer Ausführungsform in einer Brennstoffzelleneinheit 130 eingesetzt werden. Über die Zuleitung 310 der Brennstoffzelle können Brennstoff oder Oxidationsmittel zu- oder abgeleitet werden. Dabei ist offensichtlich, dass die Brennstoffzelle 300 noch mindestens zwei weitere Anschlüsse zur Zu- bzw. Ableitung von Brennstoff oder Oxidationsmittel aufweist. Diese weiteren Anschlüsse können dabei auf derselben Schmalseite angeordnet sein, wie die in der Abbildung dargestellten, sodass sämtliche Anschlüsse für die Zu - oder Ableitung von Betriebsstoffen auf einer einzigen Schmalseite der Brennstoffzelle angeordnet sein können.

Die Zuleitung 310 sowie die Ableitung 320 sind hier als Schnellverbinder ausgeführt, die ein einfaches Einstecken der Zu- bzw. Ableitung in entsprechende Gegenstücke einer solchen Schnellverbindung ermöglichen. Dabei sind die Zu- und Ableitung jeweils als Rohrstücke und mit jeweils mindestens einem umlaufenden Dichtring 330 ausgeführt. Die Zu- bzw. Ableitung bilden damit jeweils einen Stecker, der in ein Gegenstück, die Kupplung, eingesteckt wird. Das Rohrstück kann in vorteilhafter Weise zur Fixierung des Dichtringes eine umlaufende Nut aufweisen, die ein Verschieben des Dichtringes während des Einsteckens in eine Kupplung verhindert.

In der Brennstoffzelle sind die Zu- und Ableitung 310, 320 mit den gasführenden Kanälen 340, die an den Innenseiten der Polplatten 350 ausgebildet sind, verbunden. In der hier dargestellten Ausführungsform weist die Brennstoffzelle 300 weiterhin eine Umrahmung 360 aus Kunststoff auf. An der Umrahmung 360 ist weiterhin ein Sockel 370 angeformt, der beim Einstecken der Stecker 310, 320, also der Zu- und Ableitung, einen Standfuß für die Brennstoffzelle 300 bildet.

Die Brennstoffzelle kann in einer Ausführungsform Steckverbindungen zum Herstellen der elektrischen Verbindungen, also zum Abgreifen des erzeugten Stromes, aufweist. Die Steckverbindungen können auf derselben Schmalseite der Brennstoffzelle wie die Zu- und Ableitungen zur Versorgung der Zelle mit Betriebsstoffen angeordnet sein. Die Steckverbindungen können dabei zwischen oder neben den Zu- und Ableitungen der Brennstoffzelle angeordnet sein, so dass beim Einstecken der Zu- und Ableitungsstecker 310, 320 gleichzeitig die elektrischen Verbindungen hergestellt werden.

In einer alternativen Ausführungsform können die elektrischen Anschlüsse der Brennstoffzelle als Kontaktfahnen 380 ausgeführt sein, die an einer Schmalseite aus der Brennstoffzelle herausgeführt sind. Dabei können die Kontaktfahnen der Anode bzw. der Kathode der Zelle auf gegenüberliegenden Schmalseiten der Zelle oder auf derselben Schmalseite nebeneinander und beabstandet herausgeführt sein.

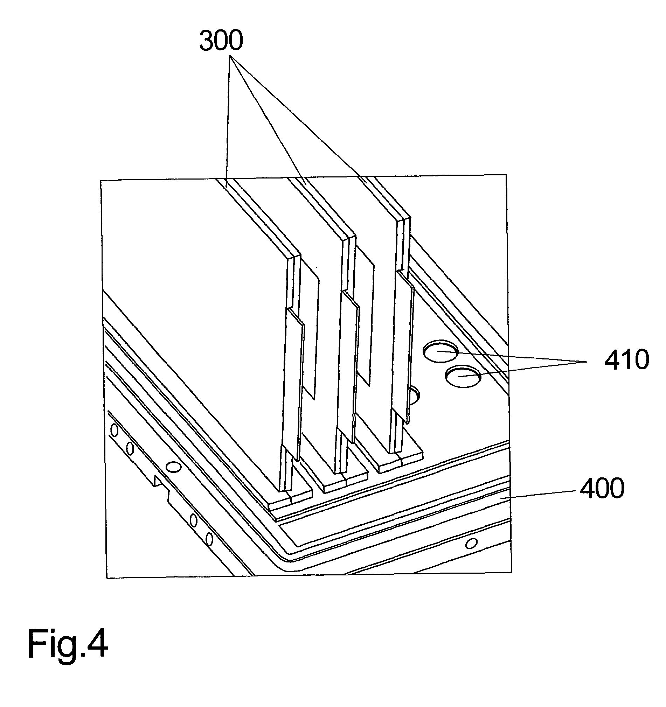

Figur 4 zeigt eine Steckplatte 400, eine sogenannte Backplane, einer Brennstoffzelleneinheit 130. Die Steckplatte weist an einer Seite mehrere Anschlüsse 410 zum Anschließen von Zu- und Ableitungen von Brennstoffzellen auf. Die Anschlüsse sind dabei im wesentlichen Bohrungen in der Platte, die in Zu- bzw. Ableitungskanäle in der Steckplatte münden. Diese Zu- und Ableitungskanäle sind mit einer Versorgungseinheit 120 verbindbar.

In einer bevorzugten Ausführungsform sind die Kupplungen so gestaltet, dass diese einen Medienfluss nur dann zulassen, wenn ein Stecker vollständig in eine Kupplung eingesteckt ist. Der Querschnitt der Zu- oder Ableitung wird dementsprechend nur dann geöffnet, wenn ein Stecker in die Kupplung eingesteckt ist. Eine solche Automatik, die einen Brennstoff- oder Oxidationsmittelfluss nur dann zulässt, wenn eine Brennstoffzelle eingesteckt ist, kann in konventioneller Weise durch einen Öffnungshebel implementiert werden, der beim Einstecken eines Steckers in die Kupplung von dem eingesteckten Ende des Steckers betätigt wird. Der Öffnungshebel bewirkt dann das Verschwenken von Klappen in der Kupplung, so dass der Leitungsquerschnitt dann freigegeben wird.

Die Zu- und Ableitungskanäle können in verschiedener Weise in der Steckplatte 400 angeordnet sein. In einer Ausführungsvariante können sämtliche Zuleitungen jeweils an eine zentrale Zuleitung und sämtliche Ableitungen an eine entsprechende zentrale Ableitung geführt sein, so dass die Brennstoffzellen hinsichtlich der Ver- und Entsorgung parallel geschaltet sind. Alternativ können die Zu- und Ableitungen durch die Zellen geschleift sein, so dass diese hinsichtlich der Ver- und Entsorgung in Reihe geschaltet sind, wobei die Kupplungen so ausgestaltet und untereinander verbunden sind, dass eine Kupplung den Fluss weiterleitet, falls keine Brennstoffzelle in die Kupplung eingesteckt ist. Eine Brennstoffzelle, die in Betriebsmittelflussrichtung hinter einem leeren Steckplatz eingesteckt ist, ist dementsprechend mit den zentralen Zu- und Ableitungen verbunden. Die Zu- und Ableitungen innerhalb der Steckplatte sind in jedem Fall so ausgestaltet, die Steckplatte für die Zu- und Ableitung von Brennstoff, Oxidationsmittel und Reaktionsprodukten jeweils einen zentralen Anschluss aufweist. Innerhalb der Steckplatte 400 gewährleisten die Zu- und Ableitungen, dass jede in die Steckplatte eingesteckte Brennstoffzelle unabhängig von anderen Brennstoffzellen mit den Betriebsstoffen versorgt und entsprechend entsorgt wird.

In einer alternativen Ausführungsform sind die Zu- und Ableitungskanäle für jede Brennstoffzelle separat zu dem Anschluss für die Versorgungseinheit geführt, so dass jede Brennstoffzelle separat an die Versorgungseinheit angeschlossen ist. Die Versorgungseinheit sowie die Steuer- und Regeleinheit sind dementsprechend ausgestaltet, so dass der Fluss der Betriebsstoffe für jede Brennstoffzelle in der Brennstoffzelleneinheit separat steuerbar ist.

Die Steckplatte 400 kann weiterhin elektrische Anschlüsse zum Herstellen der elektrischen Verbindungen der Brennstoffzellen aufweisen. In einer Ausführungsform kann die Steckplatte dazu elektrische Steckverbindungen in der Steckplatte aufweisen, so dass beim Einstecken der Stecker für die Zu- und Ableitung von Brennstoff bzw. Oxidationsmittel gleichzeitig die elektrischen Verbindungen hergestellt werden. Vorzugsweise können die elektrischen Steckverbindungen neben oder zwischen den Kupplungen für die Zu- und Ableitungen angeordnet sein. Vorzugsweise können die elektrischen Anschlüsse einer jeden Brennstoffzelle dabei separat aus der Brennstoffzelleneinheit herausgeführt sein, beispielsweise über separate Kontakte innerhalb eines zentralen Steckers, so dass die erzeugte Spannung bzw. der Strom einer jeden Zelle separat zu der Steuer- und Regelungseinheit 110 bzw. zu dem optionalen Spannungswandler 140 geführt sind.

Weiterhin kann die Steckplatte in einer Ausführungsform mindestens einen Anschluss aufweisen, über den ein weiteres Medium zugeführt werden kann, so dass mittels des Mediums ein Gehäuse einer Brennstoffzelleneinheit mit einem Innendruck beaufschlagt werden kann. Zusätzlich kann die Steckplatte einen weiteren Anschluss aufweisen, sodass das Medium das Gehäuse durchströmen kann. Das Medium kann dabei ein Heiz- oder Kühlmedium sein. Vorzugsweise können die Anschlüsse als Schnellwechselanschlüsse ausgebildet sein.

Die Steckplatte kann damit eine Vielzahl von Anschlüssen, insbesondere steckbaren Anschlüssen, zum Anschließen und insbesondere Einstecken einer Vielzahl von im wesentlichen planaren Brennstoffzellen aufweisen. Die Anschlüsse sind dementsprechend bevorzugt in parallelen Reihen angeordnet, wobei eine Brennstoffzelle in eine Reihe von Anschlüssen bzw. Steckverbindungen eingesteckt werden kann, wobei durch dieses Einstecken sämtliche elektrischen und Versorgungsverbindungen der Brennstoffzelle hergestellt werden.

In alternativen Ausführungsformen können die beschriebenen Eigenschaften der Steckplatte an einer beliebigen Seite des Gehäuses, beispielsweise als Gehäuseboden, angeordnet sein.

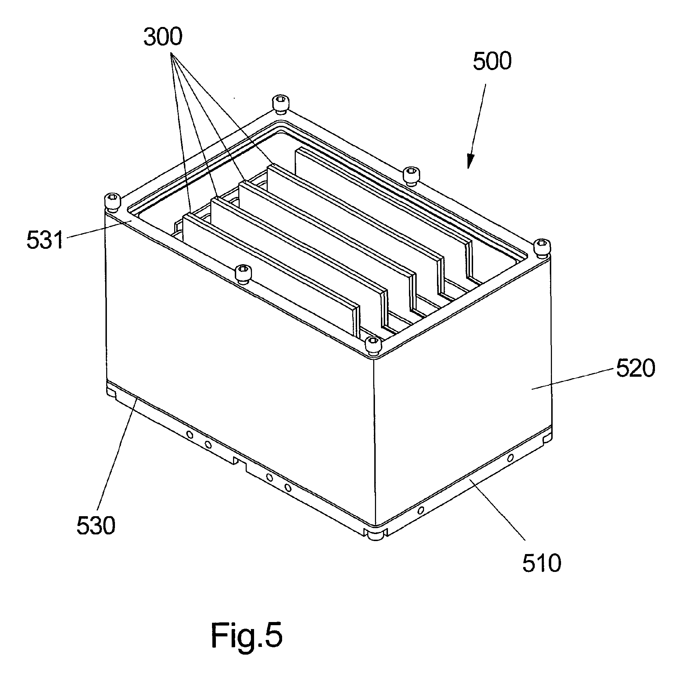

Figur 5 zeigt eine Ausführungsform eines Gehäuses 500 einer Brennstoffzelleneinheit, wobei in der Figur eine verschließende Deckelplatte nicht dargestellt ist. Eine solche Brennstoffzelleneinheit kann einer Brennstoffzelleneinheit 130 aus Fig. 1 entsprechen.

Das Gehäuse 500 weist eine Bodenplatte 510 auf, die einer Steckplatte 400 aus Fig. 4 entsprechen kann, sowie Seitenwände 520 und eine - in der Figur nicht dargestellte - Deckelplatte. Damit weist die Brennstoffzelleneinheit ein geschlossenes Gehäuse auf.

Das Gehäuse 500 kann ein oder mehrere Brennstoffzellen 300 aufnehmen, wobei diese ähnlich einem Stapel in dem Gehäuse nebeneinander angeordnet sein können. So können die Brennstoffzellen mit einer ihrer Schmalseiten bzw. Anschlüssen an dieser Schmalseite in entsprechende Anschlüsse in der Bodenplatte 510 eingesteckt sein

In einer erfindungsgemäß Ausführungsform ist das Gehäuse gasdicht und druckfest ausgebildet. Dies kann in konventioneller Weise durch Dichtungen 530, 531 zwischen Bodenplatte und Seitenwänden sowie zwischen Seitenwänden und Deckelplatte und geeignete Verschraubungen bewirkt werden.

In einer Ausführungsform kann eine Wand des Gehäuses, insbesondere eine Seitenwand oder mehrere Seitenwände 520, Einrichtungen zur Aufnahme und elektrischen Kontaktierung von elektrischen Kontaktfahnen 380 aufweisen, wobei die Einrichtungen passend zu der Anordnung der Kontaktfahnen an den Brennstoffzellen angeordnet sind. Insbesondere können die Einrichtungen an gegenüberliegenden Seitenwänden des Gehäuses angeordnet sein, so dass diese auch eine mechanische Fixierung der Brennstoffzellen in dem Gehäuse bewirken.

Weiterhin kann das Gehäuse der Brennstoffzelleneinheit 500 in einer Ausführungsform Anschlüsse zur Zu- und Ableitung eines gasförmigen oder flüssigen Heiz- oder Kühlmediums aufweisen, über die das Heiz- oder Kühlmedium durch das Gehäuse geleitet werden kann. Dabei kann das Heiz- oder Kühlmedium mit einem Überdruck, also gegenüber der umgebenden Betriebsatmosphäre erhöhten Druck, durch das Gehäuse geleitet werden. Das Gehäuse kann dabei zur Zu- oder Ableitung des Heiz- oder Kühlmittels mit einer oben beschriebenen Versorgungseinheit 120 verbunden sein, welche das Heiz- oder Kühlmedium bereitstellt. Dementsprechend sind die Zu- und Ableitung für das Heiz- oder Kühlmedium mit der Versorgungseinheit 120 verbunden, wobei die Verbindung insbesondere über Schnellverschlüsse herstellbar ist.

In einer bevorzugten Ausführungsform wird das Heiz- oder Kühlmedium mit einem Überdruck durch das Gehäuse 500 der Brennstoffzelleneinheit geleitet, wobei dieser Überdruck einen Anpressdruck der Polplatten auf die Gasdiffusionslagen und die Membran-Elektroden-Einheit in den Brennstoffzellen bewirkt. Da ein solcher Anpressdruck der Polplatten nur dann bewirkt wird, wenn zum einen der äußere Druck auf die Brennstoffzelle höher als deren Innendruck ist, wird das Heiz- oder Kühlmedium mit einem gegenüber dem Brennstoff- und Oxidationsmitteldruck erhöhten Druck durch das Gehäuse 500 geleitet. Zum anderen sind in dieser Ausführungsform die Brennstoffzellen so ausgebildet, dass diese geringfügig verformbar sind, so dass die Polplatten dem auf die Brennstoffzelle wirkenden äußeren Druck etwas nachgeben und damit einen Anpressdruck auf die Gasdiffusionslagen bzw. die Membran-Elektroden-Einheit erzeugen. Dabei ist selbstverständlich, dass zur Erzeugung des äußeren Druckes auf die Brennstoffzellen nicht notwendigerweise ein Heiz- oder Kühlmedium, sondern ein beliebiges geeignetes Medium verwendet werden kann. Auf diese Weise kann erfindungsgemäß mittels des Gehäuseinnendrucks ein definierter Anpressdruck der Polplatten auf die Gasdiffusionslagen sowie die Membran-Elektroden-Anordnung erzeugt werden.

Für den Anschluss des Gehäuses 500 der Brennstoffzelleneinheit weist das Gehäuse vorzugsweise Schnellwechselkupplungen auf, die einen Anschließen und Abtrennen sowohl der Strom- als auch der Betriebsmittelzu- und -ableitungen in einfacher und schneller Weise ermöglichen. Die Verbindungen zu einer Versorgungseinheit können dabei in einer Ausführungsform über flexible Leitungen, insbesondere flexible Druckschläuche, hergestellt werden.

Das Brennstoffzellensystem 100 ermöglicht damit einen modularen Aufbau, bei dem sowohl die Versorgungseinheit, die Brennstoffzelleneinheit, die Steuer- und Regeleinheit und die optionale Spannungswandlereinheit in modularer Weise miteinander verbunden werden können. Weiterhin ist die Brennstoffzelleneinheit so ausgebildet, dass einzelne Brennstoffzellen als Module schnell und ohne großen Aufwand in ein Gehäuse einer Brennstoffzelleneinheit eingesetzt oder herausgenommen werden können. Die modulare Bauweise des Brennstoffzellensystems ermöglicht damit eine flexible Anpassung des Systems an eine gewünschte Ausgangsleistung. Weiterhin können beispielsweise im Falle von Defekten die betroffenen Einheiten oder auch Brennstoffzellen aus dem System entnommen oder ausgetauscht werden. Das System eignet sich damit insbesondere für einen Einsatz in mobilen Geräten oder beispielsweise für hochverfügbare Anwendungen wie beispielsweise unterbrechungsfreie Stromversorgungen. Weiterhin kann das System in Einschüben beispielsweise von Schaltschränken eingesetzt werden.

## Patentansprüche

1. Brennstoffzellensystem (100) umfassend
- mindestens eine planare, flächige Brennstoffzelle (131), wobei die Brennstoffzelle (131, 200) eine ausreichende Flexibilität zur zumindest teilweisen Übertragung eines äußeren Druckes auf eine Gasdiffusionslage (220) und eine Membran-Elektroden-Einheit (210) aufweist, und
- ein geschlossenes, druckfestes Gehäuse (500) zur Aufnahme der mindestens einen Brennstoffzelle (131, 200) und eines flüssigen oder gasförmigen Mediums, wobei die Brennstoffzelle (131, 200) mindestens an ihren beiden gegenüberliegenden großen Seiten jeweils vollflächig von dem Medium umgeben ist, und
weiterhin umfassend eine Druckhaltevorrichtung (150) zur Erzeugung und Aufrechterhaltung eines Überdrucks in dem Gehäuse (500).

2. Brennstoffzellensystem nach Anspruch 1, weiterhin umfassend eine mit der Druckhaltevorrichtung (150) verbundene Steuer- und Regelungseinheit (110) zur Steuerung und Regelung des Überdrucks.

3. Brennstoffzellensystem nach einem der Ansprüche 1 oder 2, weiterhin umfassend einen Vorratsbehälter zur Speicherung des Mediums.

4. Brennstoffzellensystem nach einem der Ansprüche 1 oder 2, weiterhin umfassend eine Heiz- oder Kühlvorrichtung zur Erwärmung oder Kühlung des Mediums.

5. Brennstoffzellensystem nach Anspruch 3, weiterhin umfassend eine Vorrichtung zur Erzeugung eines Innendrucks in dem Gehäuse.

6. Verfahren zum Betrieb eines Brennstoffzellensystems (100), das mindestens ein druckfestes Gehäuse (500) zur Aufnahme mindestens einer Brennstoffzelle (131, 200) und eines flüssigen oder gasförmigen Mediums aufweist, wobei die Brennstoffzelle mindestens an ihren beiden gegenüberliegenden großen Seiten jeweils vollflächig von dem Medium umgeben ist, und wobei das flüssige oder gasförmige Medium in dem Gehäuse mit Druck so beaufschlagt wird, dass eine elastische Verformung der Brennstoffzelle (131, 200) zur Erhöhung des Anpressdrucks einer Polplatte (230) auf eine Gasdiffusionslage (220) und eine Membran-Elektroden-Einheit (210) bewirkt wird.

7. Verfahren nach Anspruch 6, wobei das flüssige oder gasförmige Medium in dem ein Heiz- oder Kühlmittel ist und das Gehäuse (500) durchströmt.

8. Verfahren nach Ansprüche 6, wobei das Brennstoffzettensystem (100) eine mit einer Druckhaltevorrichtung (150) verbundene Steuer- und Regelungseinheit (110) zur Steuerung und Regelung des Überdrucks umfasst.

9. Verfahren nach einem der Ansprüche 6 oder 8, wobei das Brennstoffzellensystem (100) weiterhin einen Vorratsbehälter zur Speicherung des Mediums umfasst.

10. Verfahren nach einem der Ansprüche 6 oder 8, wobei das Brennstoffzellensystem (100) weiterhin eine Heiz- oder Kühlvorrichtung zur Erwärmung oder Kühlung des Mediums umfasst.

## Claims

1. A fuel cell system (100) comprising:
- at least one planar, flat fuel cell (131), wherein the fuel cell (131, 200) has sufficient flexibility for at least partially transferring external pressure on a gas diffusion layer (220) and a membrane electrode assembly (210), and
- a closed, pressure-resistant housing (500) for accommodating the at least one fuel cell (131, 200) and a liquid or gaseous medium, wherein the entire surface of at least the two opposing large sides of the fuel cell (131, 200) is surrounded by the medium, and
further comprising a pressure maintaining device (150) for producing and maintaining excess pressure in the housing (500).

2. The fuel cell system according to claim 1, further comprising a control and regulating unit (110) connected with the pressure maintaining device (150) for controlling and regulating the excess pressure.

3. The fuel cell system according to any of claims 1 or 2, further comprising a reservoir for storing the medium.

4. The fuel cell system according to any of claims 1 or 2, further comprising a heating or cooling device for heating or cooling the medium.

5. The fuel cell system according to claim 3, further comprising a device for producing an internal pressure in the housing.

6. A method for operating a fuel cell system (100) comprising at least one pressure-resistant (500) housing for accommodating at least one fuel cell (131, 200) and a liquid or gaseous medium, wherein the entire surface of at least the two opposing large sides of the fuel cell is surrounded by the medium, and wherein the liquid or gaseous medium is impacted with pressure in the housing such that an elastic deformation of the fuel cell (131, 200) is effected for increasing the contact pressure of a pole plate (230) on a gas diffusion layer (220) and a membrane electrode assembly (210).

7. The method according to claim 6, wherein the liquid or gaseous medium is a heating or cooling medium and flows through the housing (500).

8. The method according to claim 6, wherein the fuel cell system (100) comprises a control and regulating unit (110) connected with a pressure maintaining device (150) for controlling and regulating the excess pressure.

9. The method according to any of claims 6 or 8, wherein the fuel cell system (100) further comprises a reservoir for storing the medium.

10. The method according to any of claims 6 or 8, wherein the fuel cell system (100) further comprises a heating or cooling device for heating or cooling the medium.

## Revendications

1. Système de pile à combustible (100) comprenant
- au moins une cellule à combustible (131) mince, plane, la cellule à combustible (131, 200) présentant une flexibilité suffisante pour la transmission au moins partielle d'une pression extérieure à une couche de diffusion de gaz (220) et une unité membrane-électrode (210), et
- un boîtier (500) fermé, résistant à la pression, destiné à recevoir ladite au moins une cellule à combustible (131, 200) et un fluide liquide ou gazeux, la cellule à combustible (131, 200) étant entourée par ledit fluide au moins sur ses deux grands côtés opposés, respectivement sur toute leur surface, et comprenant en outre un dispositif de maintien de pression (150) pour produire et maintenir une surpression dans le boîtier (500).

2. Système de pile à combustible selon la revendication 1, comprenant en outre une unité de commande et de régulation (110) reliée au dispositif de maintien de pression (150), pour commander et réguler la surpression.

3. Système de pile à combustible selon l'une des revendications 1 ou 2, comprenant en outre un réservoir pour le stockage dudit fluide.

4. Système de pile à combustible selon l'une des revendications 1 ou 2, comprenant en outre un dispositif de chauffage ou de refroidissement pour échauffer ou refroidir ledit fluide.

5. Système de pile à combustible selon la revendication 3, comprenant en outre un dispositif pour produire une pression intérieure dans le boîtier.

6. Procédé pour faire fonctionner un système de pile à combustible (100), qui comprend au moins un boîtier (500) résistant à la pression, destiné à recevoir au moins une cellule à combustible (131, 200) et un fluide liquide ou gazeux, la cellule à combustible étant entourée par ledit fluide au moins sur ses deux grands côtés opposés, respectivement sur toute leur surface, et le fluide liquide ou gazeux étant soumis à une pression dans le boîtier, de manière à produire une déformation élastique de la cellule à combustible (131, 200) pour augmenter la pression d'application d'une plaque polaire (230) sur une couche de diffusion de gaz (220) et une unité membrane-électrode (210).

7. Procédé selon la revendication 6, dans lequel le fluide liquide ou gazeux est un fluide de chauffage ou de réfrigération, et s'écoule à travers le boîtier (500).

8. Procédé selon la revendication 6, dans lequel le système de pile à combustible (100) comprend une unité de commande et de régulation (110) reliée à un dispositif de maintien de pression (150), pour commander et réguler la surpression.

9. Procédé selon l'une des revendications 6 ou 8, dans lequel le système de pile à combustible (100) comprend en outre un réservoir pour le stockage dudit fluide.

10. Procédé selon l'une des revendications 6 ou 8, dans lequel le système de pile à combustible (100) comprend en outre un dispositif de chauffage ou de refroidissement pour échauffer ou refroidir ledit fluide.
